# EUROPEAN PATENT APPLICATION

(11) **EP 4 718 154 A1**
(43) Date of publication of application: **01.04.2026**
(21) Application number: 25204534.9
(22) Date of filing: 25.09.2025
(51) Int. Cl.: G03B 31/00, G03B 21/14, H04R 1/02, H04R 1/30, H04R 1/34, G03B 21/54

(54) **PROJECTION SYSTEM AND PROJECTION DEVICE**

(30) Priority: 26.09.2024 JP 2024167610
(71) Applicant: Seiko Epson Corporation, Tokyo 160-8801 (JP)
(72) Inventor: KUROTA, Ippei, Suwa-shi, 392-8502 (JP)
(74) Representative: Lewis Silkin LLP

(57) **Abstract**

A projection system according to the present disclosure includes a projection device including a speaker, and a holding member that holds the projection device. The holding member includes a holding member main body that holds the projection device, and a horn that is provided in the holding member main body and in which a cross-sectional area of a propagation space for a sound emitted from the speaker increases from an inlet toward an outlet. The outlet of the horn is open to an external space of the holding member main body.

## Description

The present application is based on, and claims priority from JP Application Serial Number 2024-167610, filed September 26, 2024, the disclosure of which is hereby incorporated by reference herein in its entirety.

### BACKGROUND

### 1. Technical Field

The present disclosure relates to a projection system and a projection device.

### 2. Related Art

According to the related art, a projector with a built-in speaker is known. With the projector of this type, a viewer can enjoy a video with sound without coupling an external speaker to the projector. JP-A-2023-109303 discloses a projector including an outer housing, an inner housing disposed inside the outer housing, and a speaker accommodated in a part of the inner housing.

JP-A-2023-109303 is an example of the related art.

In the projector disclosed in JP-A-2023-109303, a plurality of holes are provided at a position corresponding to the speaker, in the outer housing, and a sound emitted from the speaker is emitted to an external space through the plurality of holes. In this configuration, a part of the sound is absorbed by the outer housing or reverberates inside the outer housing. Therefore, it may be difficult for the viewer to hear the sound, and it is desired to provide a projection system that allows the viewer to hear the sound more easily.

### SUMMARY

According to an aspect of the present disclosure, a projection system includes: a projection device including a speaker; and a holding member that holds the projection device. The holding member includes a holding member main body that holds the projection device, and a horn that is provided in the holding member main body and in which a cross-sectional area of a propagation space for a sound emitted from the speaker increases from an inlet toward an outlet. The outlet of the horn is open to an external space of the holding member main body.

According to another aspect of the present disclosure, a projection device includes: a projection device main body including a speaker; and a horn that is detachably provided in the projection device main body and in which a cross-sectional area of a propagation space for a sound emitted from the speaker increases from an inlet toward an outlet.

### BRIEF DESCRIPTION OF THE DRAWINGS

FIG. 1 is a perspective view showing a projection system according to a first embodiment.
FIG. 2 is a front view showing a state where a front cover and a front plate are removed.
FIG. 3 is a side view of a horn.
FIG. 4 is a front view of the horn.
FIG. 5 is a graph showing the relationship between the length and the cross-sectional area of the horn.
FIG. 6 is a perspective view showing a projection system according to a second embodiment.
FIG. 7 is a perspective view showing a state where a front cover and a front plate are removed.
FIG. 8 is a perspective view showing a projection system according to a third embodiment.
FIG. 9 is a perspective view showing a projector according to a fourth embodiment.

### DESCRIPTION OF EMBODIMENTS

### First Embodiment

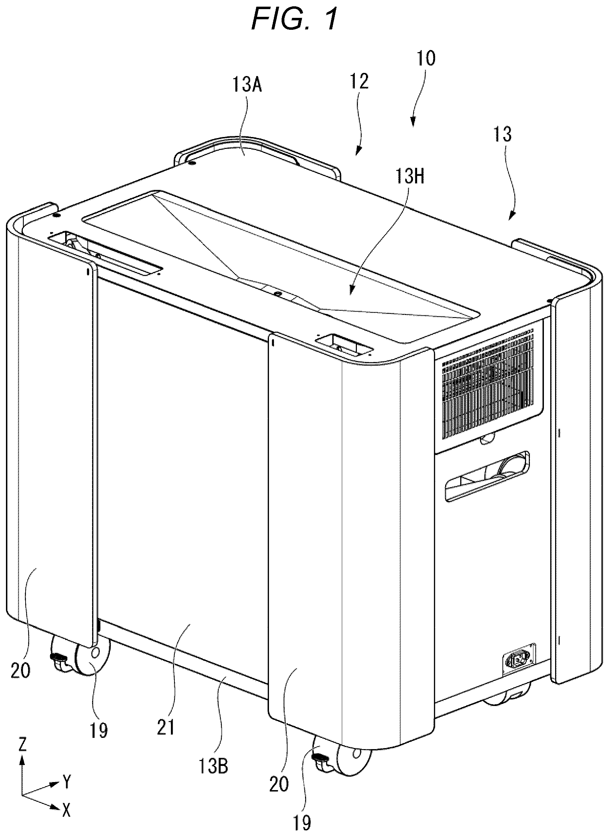

A first embodiment of the present disclosure will now be described with reference to FIGS. 1 to 5.

In the drawings referred to below, some elements may be shown at different dimensional scales in order to clarify the elements.

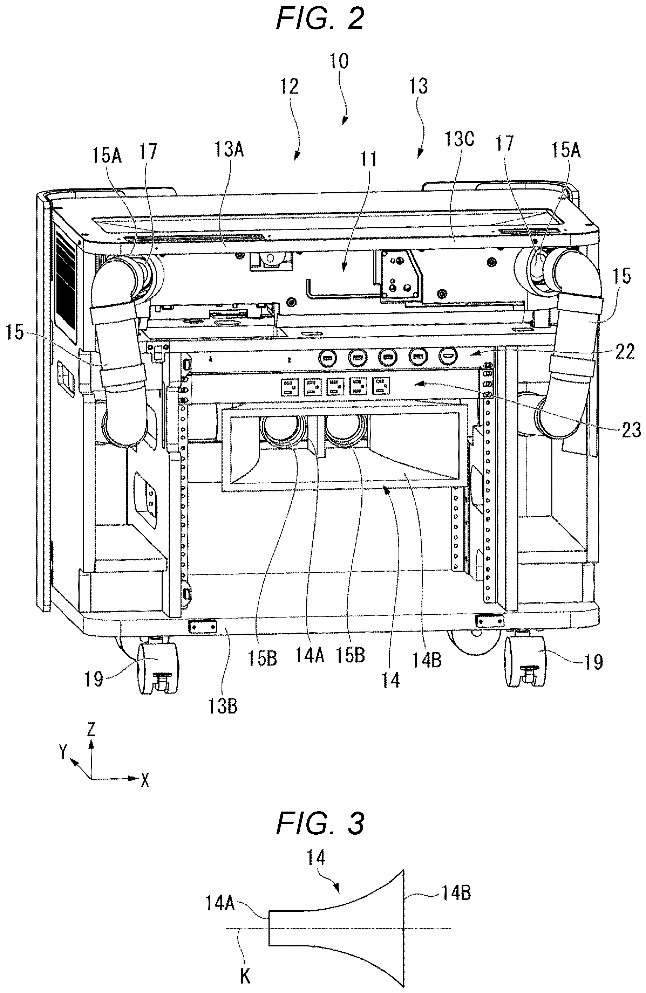

FIG. 1 is a perspective view showing the external appearance of a projection system 10 according to the present embodiment. FIG. 2 is a front view showing a state where a front cover 21 and a front plate 20 are removed from the projection system 10 shown in FIG. 1.

The projection system 10 according to the present embodiment includes a projector 11 and a cabinet 12, as shown in FIGS. 1 and 2. The projector 11 emits image light toward a projection target surface such as a screen. The cabinet 12 holds the projector 11 in a state of being accommodated therein. The projector 11 according to the present embodiment corresponds to a projection device in the appended claims. The cabinet 12 according to the present embodiment corresponds to a holding member in the appended claims.

In the description below, in a state where the cabinet 12 is placed on a floor, an axis along a left-right direction of the cabinet 12 is defined as an X axis, an axis along a depth direction of the cabinet 12 is defined as a Y axis, and an axis along a height direction of the cabinet 12 is defined as a Z axis. That is, when viewed from the viewer, a left-right direction corresponds to an X-axis direction, a depth direction corresponds to a Y-axis direction, and an up-down direction corresponds to a Z-axis direction. Also, in the description below, when viewed from a viewer, a surface on the front side of each member is referred to as a front surface, and a surface on the back side of each member is referred to as a back surface.

As shown in FIGS. 1 and 2, the cabinet 12 includes a cabinet main body 13, a horn 14, and a propagation tube 15. The cabinet main body 13 is a box-shaped member that is hollow inside, and accommodates the projector 11 in an internal space.

As shown in FIG. 1, an opening 13H for emitting the image light emitted from the projector 11 to an external space is provided in the upper plate 13A of the cabinet main body 13. The projector 11 according to the present embodiment is an ultra short focus-type reflective projector. The type of the projector 11 is not limited to the ultra short focus-type reflective projector. The image light emitted from the projector 11 is emitted obliquely upward (+Y side and +Z side) at the back side in FIG. 1 through the opening 13H. Also, as will be described later, the projector 11 is provided with a speaker 17 and can supply sounds to the viewer.

A caster 19 is provided at four corners of the bottom plate 13B of the cabinet main body 13. Thus, the user of the projector 11 can easily move the projection system 10 to a desired place.

The front surface of the cabinet main body 13 includes two front plates 20 and a front cover 21. The front plate 20 is made of wood, for example, and extends in the up-down direction on the right and left sides of the front surface of the cabinet main body 13. The front cover 21 is disposed between the two front plates 20. Although not illustrated in detail, the front cover 21 is formed of a metal plate provided with a large number of holes and a cloth having excellent air permeability. Thus, the sound emitted from the projector 11 is emitted to the external space of the cabinet 12 through the front cover 21.

As shown in FIG. 2, the cabinet main body 13 is provided with a shelf plate 13C. The internal space of the cabinet main body 13 is partitioned into substantially two spaces by the shelf plate 13C. The projector 11 is accommodated in an upper space of the cabinet main body 13. The horn 14 is accommodated in a lower space of the cabinet main body 13. An internal video interface 22, an internal power tap 23, and the like are provided below the shelf plate 13C. The internal video interface 22 is a video and/or audio port, and has a MIDI (Musical Instrument Digital Interface) port, a USB (Universal Serial Bus) port, or the like. A power cord of the projector 11 is coupled to the internal power tap 23, and AC power is supplied from an electrical outlet, not shown.

A speaker 17 is provided at each of the right end and the left end of the front surface of the projector 11. The sound emitted from the speaker 17 is propagated to the horn 14 via the propagation tube 15 and is emitted to the external space in a state where the sound pressure is increased by the horn 14.

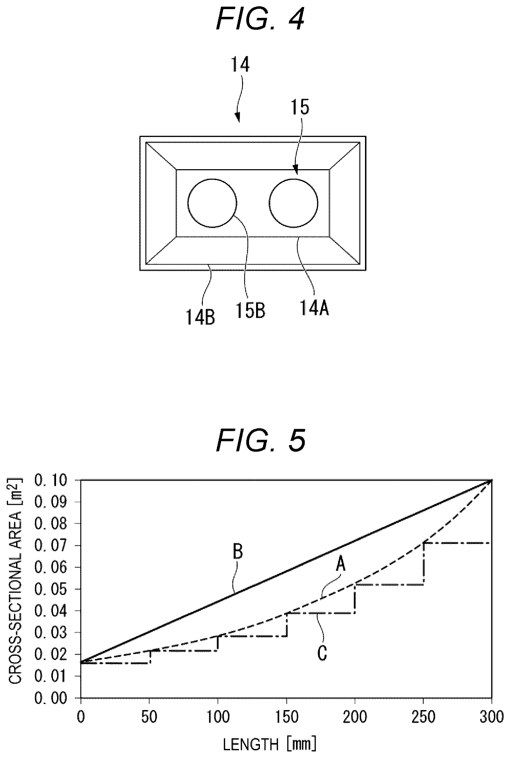

FIG. 3 is a side view of the horn 14. FIG. 4 is a front view of the horn 14.

As shown in FIGS. 3 and 4, the horn 14 is a member having a tubular shape that widens toward the forward end. The opening on the narrow side of the horn 14 is a sound inlet 14A, and the opening on the wide side of the horn 14 is a sound outlet 14B. The outlet 14B of the horn 14 is open to the external space of the cabinet main body 13. Although the above-described front cover 21 shown in FIG. 1 is disposed outside the outlet 14B of the horn 14, since the front cover 21 is formed of a metal plate having a hole and an air-permeable cloth, the outlet 14B of the horn 14 is, in practice, not sealed and is open to the external space of the cabinet main body 13.

The space inside the horn 14 functions as a propagation space for the sound emitted from the speaker 17, and the cross-sectional area of the propagation space gradually increases from the inlet 14A toward the outlet 14B of the horn 14. The term "cross-sectional area" as used herein refers to a cross-sectional area taken along a plane perpendicular to a center axis K of the horn 14. The horn 14 is fixed to any part of the cabinet main body 13, for example, a member such as the shelf plate 13C. The material of the horn 14 is not particularly limited.

The shape of the horn 14 is not particularly limited, but as shown in FIG. 3, the shape of the side surface when the horn 14 is viewed from a direction orthogonal to the center axis K is preferably a hyperbolic shape. That is, the horn 14 is preferably a so-called hyperbolic horn. The horn 14 according to the present embodiment can achieve higher propagation efficiency in a wide frequency band than horns having other shapes.

FIG. 5 is an example of a graph showing the relationship between the length and the cross-sectional area of the horn 14. In FIG. 5, the horizontal axis represents the length (mm) of the horn 14, and the vertical axis represents the cross-sectional area (m²) of the horn. The length of the horn 14 is the distance between the inlet 14A and the outlet 14B of the horn 14.

In the case of the hyperbolic horn, the relationship between the length and the cross-sectional area of the horn 14 increases in a hyperbolic manner as indicated by a line A in the graph of FIG. 5. Also, instead of the hyperbolic horn, horns having shapes indicated by lines B and C in the graph of FIG. 5 may be used.

For example, in the case of the horn indicated by the line B in the graph, the relationship between the length and the cross-sectional area of the horn linearly increases. The horn of this type is also called a conical horn, and this horn can be easily manufactured. In the case of the horn indicated by the line C in the graph, the relationship between the length and the cross-sectional area of the horn increases stepwise. In this horn, the shape of the steps is along a hyperbolic curve, and propagation characteristics similar to those of a hyperbolic horn are obtained. When it is difficult to process the curved surface of the hyperbolic horn, the horn indicated by the line C in the graph may be employed because this horn can be easily manufactured and can achieve the propagation characteristics of the hyperbolic horn in a pseudo manner. Also, a horn having an exponential side surface shape may be used.

As shown in FIG. 4, the horn 14 has a rectangular shape when viewed from the direction of the center axis K. The shape of the horn 14 when viewed from the direction of the center axis K is not limited to a rectangle, and may be, for example, a square, a circle, an ellipse, or the like, or may be another shape. In the case of the present embodiment, the sounds emitted from the two left and right speakers 17 are propagated to the one horn 14 through the two propagation tubes 15, but the cabinet main body 13 may include two horns and may be configured to propagate the sounds emitted from the respective speakers to the respective horns.

The propagation tube 15 is a tubular member provided in the cabinet main body 13 and configured to propagate the sound emitted from the speaker 17 to the horn 14. As shown in FIG. 2, an inlet 15A of the propagation tube 15 is disposed at a position facing the speaker 17. In the present embodiment, the speaker 17 and the inlet 15A of the propagation tube 15 are spaced apart from each other, but the speaker 17 and the inlet 15A of the propagation tube 15 may be in contact with each other via an elastic member such as a sponge. Meanwhile, an outlet 15B of the propagation tube 15 is disposed at a position facing the inlet 14A of the horn 14. In the present embodiment, the propagation tube 15 is formed of a round tubular member, but may be formed of a tube body having another shape such as a rectangular tube.

In the present embodiment, as shown in FIG. 2, the inlet 14A of the horn 14 is not disposed at a position facing the speaker 17 in the cabinet main body 13. Therefore, the propagation tube 15 is routed from the speaker 17 toward the horn 14 in a shape bent in various directions between the inlet 15A and the outlet 15B of the propagation tube 15.

Specifically, for example, the propagation tube 15 on the left side in FIG. 2 is configured to extend from the inlet 15A facing the speaker 17 to the front side (-Y side), bend approximately 90 degrees to extend to the lower side (-Z side), bend approximately 90 degrees to extend to the back side (+Y side), bend approximately 90 degrees to extend to the right side (+X side), and bend approximately 90 degrees to extend to the front side (-Y side), so that the outlet 15B faces the inlet 14A of the horn 14. Meanwhile, the propagation tube 15 on the right side in FIG. 2 is configured such that the propagation tubes 15 on the left and right sides are in bilateral symmetry. The propagation tube 15 is fixed to an any member of the cabinet main body 13.

In the case of the present embodiment, the propagation tube 15 includes a plurality of tube bodies, and has a part where the tube body on the inlet side and the tube body on the outlet side are coupled via a joint. With this configuration, the propagation tube 15 can be easily manufactured using existing tube bodies. Instead of this configuration, the propagation tube 15 may be formed of an integrated tube body from the inlet 15A to the outlet 15B. In the case of the present embodiment, the propagation tube 15 includes only a substantially linear part, but may include, for example, a curved part. The material of the propagation tube 15 is not particularly limited.

As shown in FIG. 4, the shape of the inlet 14A of the horn 14 includes the shape of the outlet 15B of the propagation tube 15. That is, the shape of the inlet 14A of the horn 14 is rectangular, the shape of the outlet 15B of the propagation tube 15 is circular, and therefore these shapes are different from each other, but the area of the inlet 14A of the horn 14 is larger than the area of the outlet 15B of the propagation tube 15. With this configuration, the sound radiated from the propagation tube 15 toward the horn 14 is unlikely to leak to the outside of the horn 14, and the propagation loss of the sound can be reduced. In the case of the present embodiment, the shape of the inlet 14A and the shape of the outlet 14B of the horn 14 are rectangles similar to each other, but do not necessarily have to be similar, and the ratio of the dimension in the width direction (X-axis direction) and the ratio of the dimension in the height direction (Z-axis direction) may be different.

### Effects of First Embodiment

The projection system 10 according to the present embodiment includes the projector 11 having the speaker 17 and the cabinet 12 holding the projector 11. The cabinet 12 includes the cabinet main body 13 holding the projector 11, and the horn 14, which is provided in the cabinet main body 13 and in which the cross-sectional area of the propagation space for the sound emitted from the speaker 17 increases from the inlet toward the outlet. The outlet 14B of the horn 14 is open to the external space of the cabinet main body 13.

As described above, in the projector of JP-A-2023-109303, the speaker is disposed inside the outer housing, and the sound emitted from the speaker is emitted to the external space only from the plurality of holes provided in the outer housing. Therefore, a part of the sound is absorbed by the outer housing or reverberates inside the outer housing. As a result, it may be difficult for the viewer to hear the sound.

With respect to this problem, in the projection system 10 according to the present embodiment, the cabinet 12 includes the horn 14 and therefore the propagation efficiency of the entire sound propagation path from the speaker 17 to the horn 14 is improved as compared with when the horn is not provided. Therefore, even if the output volume of the speaker 17 is the same, the sound pressure at the position of the viewer away from the speaker 17 increases. Thus, the projection system 10 with which the viewer can easily hear the sound as compared with the related art can be provided. The projection system 10 according to the present embodiment is suitable for use in a large conference room, an open space, and the like because a large volume is achieved. Also, with the projection system 10 according to the present embodiment, since the sound pressure can be increased simply by housing the existing projector 11 in the cabinet 12, there is no need to install a high-quality speaker in the projector 11. Thus, an increase in the manufacturing cost of the projector 11 can be suppressed.

In the projection system 10 according to the present embodiment, the cabinet 12 further includes the propagation tube 15 provided in the cabinet main body 13 and propagating the sound emitted from the speaker 17 to the horn 14. The inlet 15A of the propagation tube 15 is disposed at a position facing the speaker 17, and the outlet 15B of the propagation tube 15 is disposed at a position facing the inlet 14A of the horn 14.

The projection system 10 according to the present embodiment basically uses a related-art cabinet having no horn, and the horn 14 is disposed in a space below the shelf plate 13C, which is below the projector 11. Therefore, the inlet 14A of the horn 14 is arranged at a position not facing the speaker 17, and the propagation tube 15 for propagating the sound emitted from the speaker 17 to the horn 14 is required. However, when the propagation tube of this type is used, it is conceivable that the sound pressure decreases due to the propagation of the sound through the propagation tube.

To solve this problem, in the projection system 10 according to the present embodiment, since the cabinet 12 includes the horn 14, even if the sound pressure is reduced by the propagation tube 15, the reduction in the sound pressure can be compensated for by the sound pressure enhancement effect of the horn 14. In this way, the projection system 10 in which the use of the propagation tube 15 increases the degree of freedom in the arrangement of the horn 14 and enables the viewer to easily hear the sound can be provided. The inner diameter of the propagation tube 15 may be constant from the inlet 15A to the outlet 15B, or may increase from the inlet 15A toward the outlet 15B. In the latter case, the decrease in the sound pressure due to the propagation tube 15 can be suppressed.

The present discloser conducted an experiment for demonstrating the effects of the present disclosure. According to this experiment, it was confirmed that, as the propagation tube and the horn were arranged at the position facing the speaker, the sound pressure increased by several dB as compared with the case of the speaker alone, in the measurement at the position several meters away from the outlet of the horn.

### Second Embodiment

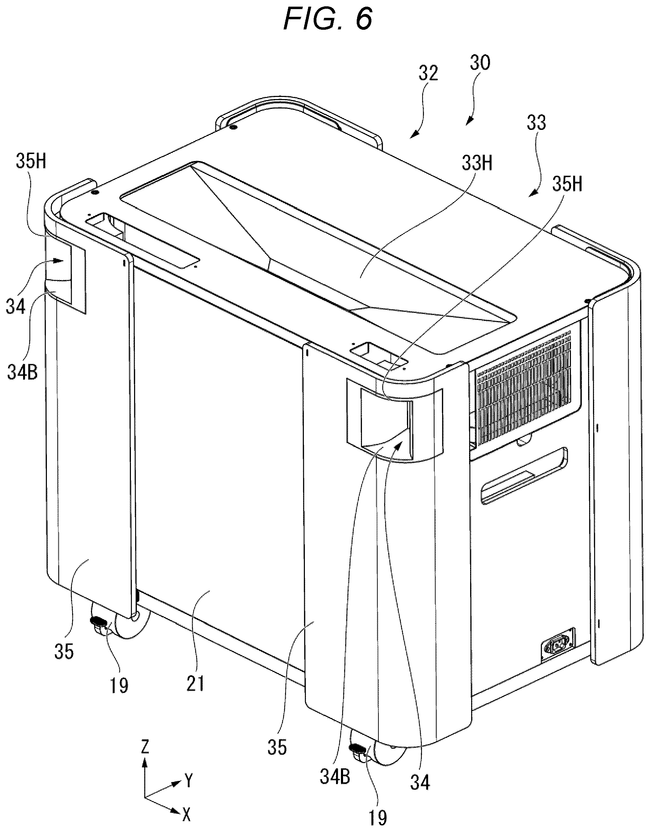

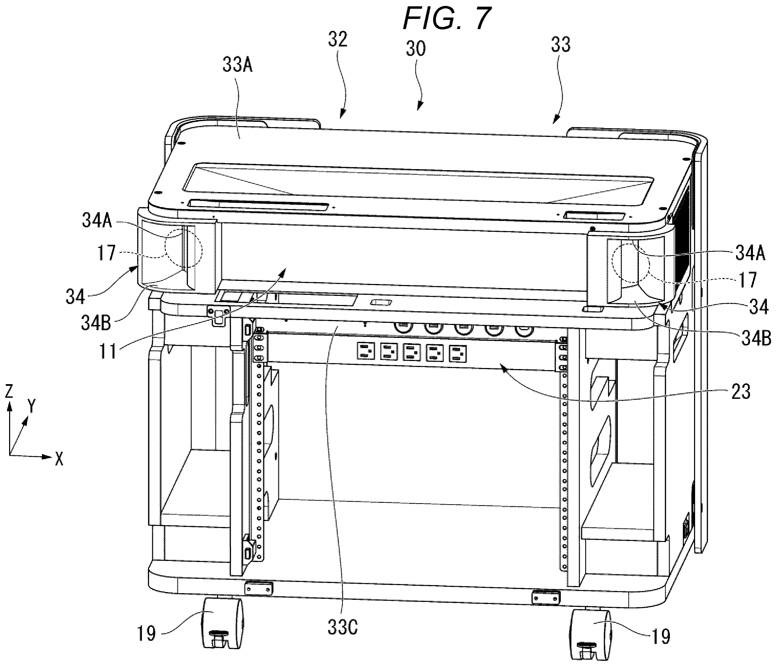

A second embodiment of the present disclosure will now be described with reference to FIGS. 6 and 7.

Since the basic configuration of the projection system according to the present embodiment is similar to that of the first embodiment, the description of the same parts will be omitted.

FIG. 6 is a perspective view showing a projection system 30 according to the second embodiment. FIG. 7 is a perspective view showing a state where a front cover 21 and a front plate 35 of the projection system 30 shown in FIG. 6 are removed.

In FIGS. 6 and 7, the same elements as those in the drawings used in the first embodiment are denoted by the same reference characters.

As shown in FIGS. 6 and 7, the projection system 30 according to the present embodiment includes a projector 11 and a cabinet 32. The cabinet 32 includes a cabinet main body 33 and a horn 34.

As shown in FIG. 6, an opening 35H for releasing the sound emitted from the speaker 17 to the external space is provided in an upper part of a pair of left and right front plates 35 of the cabinet 32. The cabinet main body 33 is provided with an opening 33H for emitting image light from the projector 11.

As shown in FIG. 7, the horn 34 is disposed at each of positions facing the left and right speakers 17 of the projector 11, in the cabinet main body 33. The horn 34 is fixed to, for example, an upper plate 33A and a shelf plate 33C of the cabinet main body 33, and is not fixed to the projector 11. An inlet 34A of the horn 34 and the speaker 17 may be spaced apart from each other or may be in contact with each other. Thus, the inlet 34A of the horn 34 is disposed at a position facing the speaker 17. Meanwhile, an outlet 34B of the horn 34 is open to an external space of the cabinet main body 33. As described above, while the cabinet 12 in the first embodiment includes the propagation tube 15, the cabinet 32 in the present embodiment does not include the propagation tube 15.

In the present embodiment, though a front view of the horn 34 is omitted, the shape of the inlet 34A of the horn 34 includes the shape of the cone of the speaker 17. That is, the shape of the inlet 34A of the horn 34 is rectangular, the shape of the cone of the speaker 17 is circular, and therefore these shapes are different from each other, but the area of the inlet 34A of the horn 34 is larger than the area of the cone of the speaker 17. With this configuration, the sound radiated from the cone of the speaker 17 to the horn 34 is unlikely to leak to the outside of the horn 34, and the propagation loss of the sound can be reduced.

Other configurations of the projection system 30 are similar to those of the projection system 10 according to the first embodiment.

### Effects of Second Embodiment

In the present embodiment, too, effects similar to those of the first embodiment can be achieved, that is, the projection system 30 with which the viewer can easily hear the sound while an increase in the manufacturing cost of the projector 11 is suppressed can be provided.

In the projection system 30 according to the present embodiment, since the cabinet 32 does not include the propagation tube 15, there is no risk of a decrease in the sound pressure due to the propagation tube 15 described in the first embodiment, and the sound pressure enhancement effect by the horn 34 can be sufficiently achieved. Also, since the propagation tube 15 is unnecessary, the number of components of the projection system 30 can be reduced.

### Third Embodiment

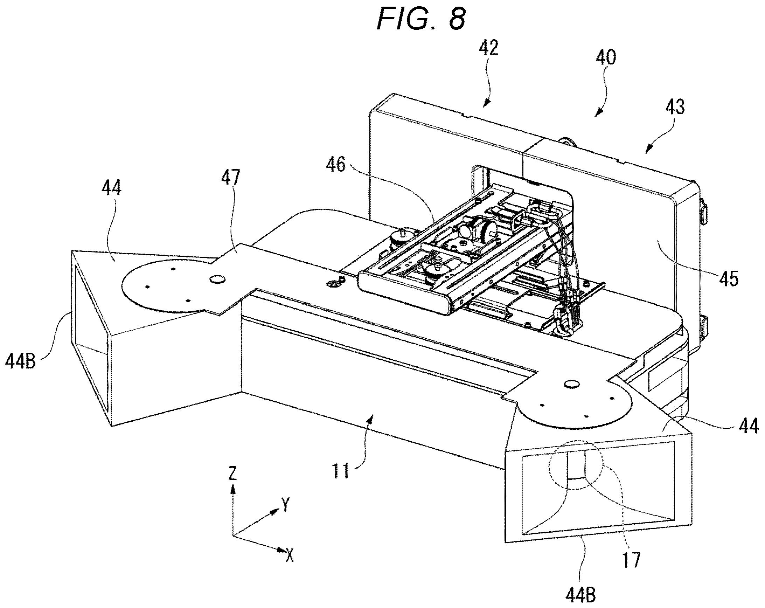

A third embodiment of the present disclosure will now be described with reference to FIG. 8.

FIG. 8 is a perspective view showing a projection system 40 according to a third embodiment.

In FIG. 8, the same elements as those in the drawings used in the first embodiment are denoted by the same reference characters.

In the first embodiment and the second embodiment, examples of a floor-mounted projection system is described. In contrast, in the present embodiment, an example of a wall-mounted projection system will be described.

As shown in FIG. 8, the projection system 40 according to the present embodiment includes a projector 11 and a hanging metal bracket 42. The hanging metal bracket 42 includes a hanging metal bracket main body 43 and a horn 44. The hanging metal bracket 42 in the present embodiment corresponds to a holding member in the appended claims. The hanging metal bracket main body 43 in the present embodiment corresponds to a holding member main body in the appended claims.

The hanging metal bracket main body 43 includes a wall fixing part 45, a hanging part 46, and a sheet metal 47. The wall fixing part 45 is formed of a member for fixing the projection system 40 to the wall. The hanging part 46 extends in the horizontal direction in relation to the wall fixing part 45 and suspends the projector 11. The sheet metal 47 is fixed to the hanging part 46.

The horn 44 is disposed at a position facing each of the left and right speakers 17 of the projector 11. The horn 44 is formed integrally with the sheet metal 47 of the hanging metal bracket 42. The horn 44 is disposed at a position facing each of the speakers 17 in a state where the projector 11 is attached to the hanging metal bracket 42. With this configuration, the attachment structure of the horn 44 can be simplified and the horn 44 can be easily aligned in position. The inlet of the horn 44 and the speaker 17 may be spaced apart from each other or may be in contact with each other. An outlet 44B of the horn 44 is open to the external space of the projection system 40.

In the present embodiment, too, as in the second embodiment, the shape of the inlet of the horn 44 includes the shape of the cone of the speaker 17. That is, the area of the inlet of the horn 44 is larger than the area of the cone of the speaker 17. With this configuration, the sound radiated from the cone of the speaker 17 toward the horn 44 is unlikely to leak to the outside of the horn 44, and the propagation loss of the sound can be reduced.

### Effects of Third Embodiment

In the present embodiment, too, effects similar to those of the first embodiment can be achieved, that is, the projection system 40 with which the viewer can easily hear the sound while an increase in the manufacturing cost of the projector 11 is suppressed can be provided.

### Fourth Embodiment

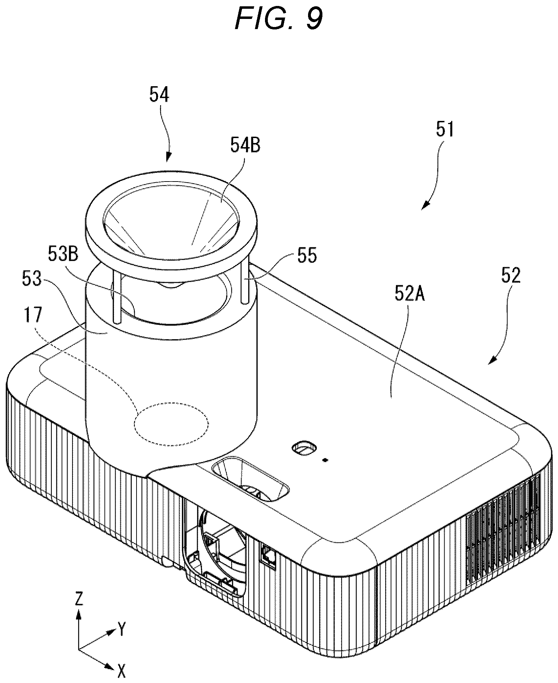

A fourth embodiment of the present disclosure will now be described with reference to FIG. 9.

FIG. 9 is a perspective view showing a projector 51 according to a fourth embodiment.

As shown in FIG. 9, a projector 51 according to the present embodiment includes a projector main body 52, a propagation tube 53, and a horn 54. In the first to third embodiments, examples of the projection system in a form in which the projector 11 is held by a holding member such as a cabinet or a hanging metal bracket is described, but in the present embodiment, an example in which the projector 51 is used alone will be described. The projector 51 according to the present embodiment corresponds to a projection device in the appended claims. The projector main body 52 in the present embodiment corresponds to a projection device main body in the appended claims.

The projector main body 52 has a speaker 17. In the present embodiment, the speaker 17 is disposed at an upper surface 52A of the projector main body 52. The position of the speaker 17 is not necessarily limited to the upper surface 52A of the projector main body 52, and may be, for example, a side surface of the projector main body 52.

The propagation tube 53 is detachably installed at a position facing the speaker 17, on the upper surface 52A of the projector main body 52. The propagation tube 53 is formed of a tube body extending in the up-down direction of the projector main body 52. Specifically, the propagation tube 53 is detachably fitted into, for example, a circular groove provided in the upper surface 52A of the projector main body 52. The propagation tube 53 may be simply placed on the upper surface 52A of the projector main body 52.

The horn 54 is disposed facing an outlet 53B of the propagation tube 53. The horn 54 is coupled to the propagation tube 53 via a plurality of pins 55 arranged along the circumferential direction of the propagation tube. In the horn 54, the cross-sectional area of the propagation space for the sound emitted from the speaker 17 increases from the inlet toward the outlet. In this way, the horn 54 is detachably installed to the projector main body 52. An outlet 54B of the horn 54 is open to the external space of the projector 51.

### Effects of Fourth Embodiment

According to the present embodiment, the sound pressure can be improved simply by attaching the propagation tube 53 and the horn 54 to the projector main body 52 without incorporating a high-quality speaker in the projector main body 52. Thus, the projector 51 with which the viewer can easily hear the sound while an increase in the manufacturing cost of the projector main body 52 is suppressed can be provided.

Note that the technical scope of the present disclosure is not limited to the above-described embodiments, and various modifications can be made thereto without departing from the spirit and scope of the present disclosure.

In the above embodiment, the center axis of the horn has a shape linearly extending from the inlet to the outlet, but instead of this configuration, the center axis of the horn may have a shape bent or curved between the inlet and the outlet. For example, when the speaker is disposed at a side surface of the projector, a horn having a shape such that the inlet of the horn faces the side surface of the projector, the center axis of the horn is bent by 90 degrees, and the outlet of the horn faces the front, may be used.

In the above-described third embodiment, an example of a wall-mounted projection system is described, but the present disclosure may be applied to a projection system that is suspended from a ceiling. In this case, a ceiling fixing part may be provided instead of the wall fixing part of the hanging metal bracket of the third embodiment.

In addition, the specific description of the material, the number, the arrangement, and the like of each element of the projection system is not limited to the above embodiments and can be changed as appropriate.

### Summary of Present Disclosure

A summary of the present disclosure is appended below.

### Appendix 1

A projection system including: a projection device including a speaker; and a holding member configured to hold the projection device, wherein the holding member includes: a holding member main body configured to hold the projection device; and a horn that is provided in the holding member main body and in which a cross-sectional area of a propagation space for a sound emitted from the speaker increases from an inlet toward an outlet, and the outlet of the horn is open to an external space of the holding member main body.

With the configuration according to Appendix 1, the sound pressure of the sound emitted from the speaker can be increased by the horn of the holding member simply by holding the existing projection device on the holding member. Therefore, a high-quality speaker need not be installed in the projection device, and a projection system with which the viewer can easily hear the sound while an increase in the manufacturing cost of the projection device is suppressed can be provided.

### Appendix 2

The projection system according to Appendix 1, wherein the holding member is a cabinet that accommodates the projection device.

With the configuration according to Appendix 2, a projection system including a stationary cabinet can be provided.

### Appendix 3

The projection system according to Appendix 2, wherein the holding member further includes a propagation tube provided in the holding member main body and configured to propagate the sound emitted from the speaker to the horn, an inlet of the propagation tube is disposed at a position facing the speaker, and an outlet of the propagation tube is disposed at a position facing the inlet of the horn.

With the configuration according to Appendix 3, since the sound emitted from the speaker is propagated to the inlet of the horn by the propagation tube, the degree of freedom in arrangement of the horn can be increased.

### Appendix 4

The projection system according to Appendix 3, wherein a shape of the inlet of the horn includes a shape of the outlet of the propagation tube.

With the configuration according to Appendix 4, the sound radiated from the outlet of the propagation tube to the inlet of the horn is unlikely to leak to the outside of the horn, and the propagation loss of the sound can be reduced.

### Appendix 5

The projection system according to Appendix 3 or 4, wherein the inlet of the horn is not disposed at a position facing the speaker of the holding member main body, and the propagation tube is bent or curved between the inlet of the propagation tube and the outlet of the propagation tube.

With the configuration according to Appendix 5, since the inlet of the horn is not disposed at a position facing the speaker, the degree of freedom in the arrangement of the horn can be increased further.

### Appendix 6

The projection system according to Appendix 2, wherein the inlet of the horn is disposed at a position facing the speaker of the holding member main body.

With the configuration according to Appendix 6, since the propagation tube is unnecessary, the sound pressure enhancement effect by the horn can be sufficiently achieved and the number of components of the projection system can be reduced.

### Appendix 7

The projection system according to Appendix 6, wherein a shape of the inlet of the horn includes a shape of a cone of the speaker.

With the configuration according to Appendix 7, the sound radiated from the cone of the speaker to the inlet of the horn is unlikely to leak to the outside of the horn, and the propagation loss of the sound can be reduced.

### Appendix 8

The projection system according to Appendix 1, wherein the holding member is a hanging metal bracket that suspends the projection device.

With the configuration according to Appendix 8, a suspended projection system can be provided.

### Appendix 9

The projection system according to Appendix 8, wherein the inlet of the horn is disposed at a position facing the speaker of the holding member main body.

With the configuration according to Appendix 9, since the propagation tube is unnecessary, the sound pressure enhancement effect by the horn can be sufficiently achieved and the number of components of the projection system can be reduced.

Appendix 10

The projection system according to Appendix 8 or 9, wherein the horn is formed integrally with a sheet metal of the hanging metal bracket.

With the configuration according to Appendix 10, the horn attachment structure can be simplified.

### Appendix 11

The projection system according to Appendix 9 or 10, wherein a shape of the inlet of the horn includes a shape of a cone of the speaker.

With the configuration according to Appendix 11, the sound radiated from the cone of the speaker to the inlet of the horn is unlikely to leak to the outside of the horn, and the propagation loss of the sound can be reduced.

### Appendix 12

The projection system according to any one of Appendices 1 to 11, wherein the horn is a hyperbolic horn.

With the configuration according to Appendix 12, high propagation efficiency in a wide frequency band can be achieved as compared with horns having other shapes.

### Appendix 13

A projection device including: a projection device main body including a speaker; and a horn that is detachably provided in the projection device main body and in which a cross-sectional area of a propagation space for a sound emitted from the speaker increases from an inlet toward an outlet.

With the configuration according to Appendix 13, the sound pressure of the sound emitted from the speaker can be increased simply by attaching the horn to the existing projection device main body. Therefore, a high-quality speaker need not be installed in the projection device main body, and a projection device with which the viewer can easily hear the sound while an increase in the manufacturing cost of the projection device is suppressed can be provided.

## Claims

1. A projection system comprising:
a projection device including a speaker; and
a holding member configured to hold the projection device, wherein
the holding member comprises:
a holding member main body configured to hold the projection device; and
a horn that is provided in the holding member main body and in which a cross-sectional area of a propagation space for a sound emitted from the speaker increases from an inlet toward an outlet, and
the outlet of the horn is open to an external space of the holding member main body.

2. The projection system according to claim 1, wherein
the holding member is a cabinet that accommodates the projection device.

3. The projection system according to claim 2, wherein
the holding member further comprises a propagation tube provided in the holding member main body and configured to propagate the sound emitted from the speaker to the horn,
an inlet of the propagation tube is disposed at a position facing the speaker, and
an outlet of the propagation tube is disposed at a position facing the inlet of the horn.

4. The projection system according to claim 3, wherein
a shape of the inlet of the horn includes a shape of the outlet of the propagation tube.

5. The projection system according to claim 3, wherein
the inlet of the horn is not disposed at a position facing the speaker of the holding member main body, and
the propagation tube is bent or curved between the inlet of the propagation tube and the outlet of the propagation tube.

6. The projection system according to claim 2, wherein
the inlet of the horn is disposed at a position facing the speaker of the holding member main body.

7. The projection system according to claim 6, wherein
a shape of the inlet of the horn includes a shape of a cone of the speaker.

8. The projection system according to claim 1, wherein
the holding member is a hanging metal bracket that suspends the projection device.

9. The projection system according to claim 8, wherein
the inlet of the horn is disposed at a position facing the speaker of the holding member main body.

10. The projection system according to claim 8, wherein
the horn is formed integrally with a sheet metal of the hanging metal bracket.

11. The projection system according to claim 9, wherein
a shape of the inlet of the horn includes a shape of a cone of the speaker.

12. The projection system according to claim 1, wherein
the horn is a hyperbolic horn.

13. A projection device comprising:
a projection device main body including a speaker; and
a horn that is detachably provided in the projection device main body and in which a cross-sectional area of a propagation space for a sound emitted from the speaker increases from an inlet toward an outlet.
